# EUROPÄISCHE PATENTSCHRIFT

(11) **EP 3 503 154 B1**
(45) Veröffentlichungstag und Bekanntmachung des Hinweises auf die Patenterteilung: **24.06.2020**
(21) Anmeldenummer: 18206861.9
(22) Anmeldetag: 16.11.2018
(51) Int. Cl.: H01H 35/26

(54) **VERFAHREN ZUM VERÄNDERN EINES ARBEITSFLUIDS IN EINEM AUSDEHNUNGSSYSTEM UND AUSDEHNUNGSSYSTEM**
METHOD FOR ALTERING A WORKING FLUID IN AN EXPANSION SYSTEM AND EXPANSION SYSTEM
PROCÉDÉ DE CHANGEMENT D'UN FLUIDE DE TRAVAIL DANS UN SYSTÈME D'EXPANSION ET SYSTÈME D'EXPANSION

(30) Priorität: 19.12.2017 DE 102017223290
(43) Veröffentlichungstag der Anmeldung: 26.06.2019
(73) Patentinhaber: E.G.O. Elektro-Gerätebau GmbH, 75038 Oberderdingen (DE)
(72) Erfinder: Jenz, Christoph, 75038 Oberderdingen (DE); Roth, Martin, 76703 Kraichtal (DE)
(74) Vertreter: Patentanwälte Ruff, Wilhelm, Beier, Dauster & Partner mbB

(56) Entgegenhaltungen:
- EP-A1- 0 005 191
- EP-A2- 0 822 341
- US-A- 2 840 669

## Beschreibung

### Anwendungsgebiet und Stand der Technik

Die Erfindung betrifft ein Verfahren zum Verändern eines Arbeitsfluids in einem Ausdehnungssystem, welches zur Temperaturerfassung mittels thermomechanischer Ausdehnung und Bewegung genutzt wird. Des Weiteren betrifft die Erfindung ein solches Ausdehnungssystem in verschiedenen Ausgestaltungen.

Aus der EP 0005191 A1 ist ein solches Ausdehnungssystem zur Temperaturerfassung bekannt. Das Ausdehnungssystem weist ein dünnes Rohr als Fluidleitung auf, an dessen außenliegendem Ende eine Art Vorratsbehälter vorgesehen ist, in dem eine größere Menge von Arbeitsfluid enthalten sein kann. Am anderen Ende ist die Fluidleitung mit einem Ausdehnungsbehälter fluidleitend verbunden, der als eine sogenannte Ausdehnungsdose ausgebildet ist und im Wesentlichen in flacher Ausgestaltung zwei dünne gewellte Metallbleche aufweist, die korrespondierend und konzentrisch gewählt sind und geringfügigen Abstand zueinander aufweisen. Abhängig von einer Temperatur weist das Arbeitsfluid eine bestimmte Ausdehnung auf, welche sich mit variierender Temperatur verändert. Dies wird eben thermomechanisch in eine Bewegung des Ausdehnungsbehälters bzw. der Ausdehnungsdose umgesetzt, um damit dann bei einem bestimmten Temperaturwert und nach einem bestimmten Weg einen Schaltvorgang auszulösen oder einen Kontakt zu schließen oder zu öffnen.

Aus der US 2840669A ist ein weiteres Ausdehnungssystem mit einer Fluidleitung zur Temperaturerfassung mit einem thermostatischen Schalter bekannt. Dabei ist ein Arbeitsfluid in dem Ausdehnungssystem so ausgebildet, dass es bei höherer Temperatur verdampft. Bei Beschädigung des Ausdehnungssystems soll so viel Arbeitsfluid verdampfen, dass der Schalter auf alle Fälle durch eine Federkraft geöffnet wird und geöffnet bleibt.

Aus der EP 0822341A2 ein nochmals weiteres Ausdehnungssystem zur Betätigung eines elektrischen Schalters bekannt. Hier ist ein Mikroschalter vorgesehen, um eine Pumpe stoppen zu können, die ein Arbeitsfluid in einem Arbeitsbehälter unter Druck setzt.

Probleme können entstehen, wenn die Fluidleitung bricht bzw. undicht wird. Dann kann nämlich Arbeitsfluid austreten, unter Umständen auch sehr viel. Dies führt dazu, dass sich der Ausdehnungsbehälter zusammenzieht, was dem Vorgang entspricht, wenn eine erfasste Temperatur sehr niedrig werden würde. Dies bedeutet dann wiederum, dass bei von einem überwachten und temperaturgeregelten Heizsystem erreichter kritischer oder vorgegebener Temperatur kein Abschalten mehr erfolgt durch den Thermostat und somit ein unbeherrschter Heizvorgang vorliegt und möglicherweise auch Beschädigungen auftreten können. Da die Fluidleitung eben ein dünnes Metallrohr ist, ist eine solche Gefahr gegeben, beispielsweise auch wenn sie mehrfach und zu stark gebogen oder abgeknickt wird.

### Aufgabe und Lösung

Der Erfindung liegt die Aufgabe zugrunde, ein eingangs genanntes Verfahren sowie ein eingangs genanntes Ausdehnungssystem zu schaffen, mit denen Probleme des Standes der Technik gelöst werden können und es insbesondere möglich ist, die Sicherheit des Ausdehnungssystems bzw. einer Temperaturerfassung mit dem Ausdehnungssystem zu erhöhen und Fehler zu vermeiden bzw. selbst bei Beschädigung des Ausdehnungssystems, insbesondere mit der möglichen Konsequenz eines Austritts von Arbeitsfluid, eine erhöhte Sicherheit zu erreichen.

Gelöst wird diese Aufgabe durch ein Verfahren mit den Merkmalen des Anspruchs 1 sowie durch ein Ausdehnungssystem mit den Merkmalen des Anspruchs 6. Vorteilhafte sowie bevorzugte Ausgestaltungen der Erfindung sind Gegenstand der weiteren Ansprüche und werden im Folgenden näher erläutert. Dabei werden manche der Merkmale nur für das Verfahren oder nur für das Ausdehnungssystem beschrieben. Sie sollen jedoch unabhängig davon sowohl für das Verfahren als auch für das Ausdehnungssystem selbständig und unabhängig voneinander gelten können. Der Wortlaut der Ansprüche wird durch ausdrückliche Bezugnahme zum Inhalt der Beschreibung gemacht.

Bei dem erfindungsgemäßen Verfahren zum Verändern eines Arbeitsfluids in einem Ausdehnungssystem zur Temperaturerfassung, welches insbesondere auch einen Kontaktvorgang bzw. einen Schaltvorgang auslöst, wobei die Temperaturerfassung mittels thermomechanischer Ausdehnung und Bewegung erfolgt, enthält das Ausdehnungssystem ein Arbeitsfluid bzw. weist das Arbeitsfluid auf. Des Weiteren ist ein Aktivierungsmaterial zur Veränderung des Arbeitsfluids vorgesehen, insbesondere an dem Ausdehnungssystem angebracht bzw. aufgebracht oder in dem Arbeitsfluid enthalten, dann vorzugsweise verkapselt.

Es ist vorgesehen, dass das Aktivierungsmaterial bei Kontakt mit dem Arbeitsfluid oder bei Vermischung mit dem Arbeitsfluid dieses Arbeitsfluid verändert oder sich selbst verändert, und zwar hinsichtlich eines Volumens des Arbeitsfluids und/oder einer Fließfähigkeit des Arbeitsfluids bzw. seiner Viskosität oder der Mischung aus Arbeitsfluid und Aktivierungsmaterial oder nur der Aktivierungsmaterials alleine. Somit kann mit diesem speziellen Aktivierungsmaterial eine Art Sicherungsmittel oder Notmittel geschaffen werden, das dann einsetzt oder wirkt, wenn das Ausdehnungssystem einen fehlerhaften Zustand aufweist bzw. beeinträchtigt oder beschädigt ist, unter Umständen sogar zerstört ist. Damit kann die Betriebssicherheit erheblich erhöht werden. Das Aktivierungsmaterial ist eben speziell so ausgewählt, dass es diese Funktion aufweisen oder bewirken kann, wobei es hierfür mehrere verschiedene grundsätzliche Möglichkeiten gibt. Diese werden hinsichtlich ihrer verschiedenen Ausgestaltungen im Folgenden noch näher erläutert.

In einer ersten grundsätzlichen Ausgestaltung der Erfindung kann vorgesehen sein, dass das Aktivierungsmaterial derart ausgebildet ist, dass es nur die Fließfähigkeit bzw. die Viskosität des Arbeitsfluids verändert. Insbesondere kann das Aktivierungsmaterial die Fließfähigkeit stark herabsetzen bzw. die Viskosität stark erhöhen, so dass beispielsweise durch eine kleine Bruchstelle im Ausdehnungssystem mit der Folge einer kleinen Undichtigkeit das Arbeitsfluid aufgrund der verringerten Fließfähigkeit nicht mehr so leicht entweichen kann oder auslaufen kann. In vorteilhafter Ausgestaltung der Erfindung kann dies so gewählt werden, dass das Arbeitsfluid sozusagen aushärtet oder verhärtet, wodurch es überhaupt nicht mehr aus dem Ausdehnungssystem entweichen kann. Alternativ kann das Aktivierungsmaterial aushärten oder verhärten Damit wird nicht nur eine Stelle möglicher Undichtigkeit im Ausdehnungssystem sozusagen verklebt und damit wieder abgedichtet, sondern das nur noch geringfügig fließfähige oder gar nicht mehr fließfähige Arbeitsfluid kann auch nicht mehr auslaufen. Dies kann eben auch durch das veränderte Aktivierungsmaterial erreicht werden.

Vorteilhaft kann vorgesehen sein, dass diese Veränderung des Arbeitsfluids im Bereich des Kontakts des Arbeitsfluids mit dem Aktivierungsmaterial stattfindet. Eine mögliche Veränderung des Arbeitsfluids bzw. des Aktivierungsmaterials hinsichtlich Fließfähigkeit kann so sein, dass sich diese auch ein Stück weg von dem Kontaktbereich sozusagen ausbreitet oder fortsetzt innerhalb des Ausdehnungssystems bzw. innerhalb des Arbeitsfluids. Diese Ausdehnung kann im Bereich von 1 mm bis 20 mm liegen, vorteilhaft 2 mm bis 10 mm. Dies wird als ausreichend erachtet, um auf diesem Weg eine ausreichende Abdichtung der Undichtigkeit im Ausdehnungssystem zu erreichen.

In einer grundsätzlich anderen zweiten Ausgestaltung der Erfindung kann vorgesehen sein, dass das Aktivierungsmaterial derart gewählt ist, insbesondere auch das Arbeitsfluid, dass sich bei Kontakt zwischen den beiden zuerst das Volumen des Arbeitsfluids vergrößert, alternativ das Fluid des Aktivierungsmaterials selbst. Eine solche Volumenvergrößerung erfolgt vorteilhaft durch Aufschäumen, also indem Gase gebildet werden durch eine chemische Reaktion bei Kontakt von Aktivierungsmaterial und Arbeitsfluid. Alternativ kann auf rein chemischem Weg eine gewisse Volumenvergrößerung erfolgen. Diese Volumenvergrößerung sollte insgesamt mindestens 2 % betragen, vorteilhaft mindestens 10 % oder sogar mindestens 30 %. Sie kann bis zu 100 % oder sogar bis zu 200 % betragen, insbesondere bei einem Aufschäumen.

Durch diese Vergrößerung des Volumens des Arbeitsfluids im Ausdehnungssystem wird zwar einerseits der Druck vergrößert, durch den dann möglicherweise noch mehr Arbeitsfluid aus der Undichtigkeit des Ausdehnungssystems austreten kann. Gleichzeitig wird aber wie im Falle einer Temperaturerhöhung, insbesondere einer sehr raschen und starken Temperaturerhöhung, ein Ausdehnungsbehälter des Ausdehnungssystems ausgedehnt bzw. löst einen Kontaktvorgang oder Schaltvorgang aus, der in der Regel zum Abschalten einer Heizeinrichtung dient. Damit wird zumindest die mögliche Gefahr einer ungeregelten und weiter arbeitenden Heizeinrichtung fürs Erste vermieden. Entweder können dann mechanische Sicherungsmittel eingreifen, die bei einer derart starken Ausdehnung und Bewegung eingreifen und ein erneutes Wiedereinschalten verhindern bzw. die Heizeinrichtung nicht mehr einschalten lassen. Alternativ und vorteilhaft kann vorgesehen sein, dass sich nach der Vergrößerung des Volumens die Fließfähigkeit verringert bzw. die Viskosität erhöht. Dies wiederum bewirkt eine Art Verstopfen oder Abdichtung der Undichtigkeit wie zuvor beschrieben, wodurch es eben möglich ist, den Schaltzustand mit Ausschalten bzw. ausgeschalteter der Heizeinrichtung dauerhaft zu machen oder dauerhaft zu halten. Dies kann vorteilhaft ebenso wieder so weit gehen, dass das in seinem Volumen vergrößerte Arbeitsfluid verhärtet ist oder dauerhaft ausgehärtet ist. So wird dieser Zustand sozusagen fixiert, eine mit dem Ausdehnungssystem geregelte Heizeinrichtung ist dauerhaft abgeschaltet.

Bei beiden grundsätzlichen Ausgestaltungen der Erfindung ist es zwar wahrscheinlich der Fall, dass das Ausdehnungssystem zerstört ist und nicht wiederhergestellt werden kann. Es muss dann eben ausgetauscht werden. Ein möglicher schwerwiegender Fehlerfall wird jedoch zuverlässig verhindert, was als weitaus wichtiger angesehen wird.

In vorteilhafter Ausgestaltung der Erfindung kann vorgesehen sein, dass das Aktivierungsmaterial derart ausgebildet ist, dass es das Arbeitsfluid vernetzt. Dazu kann das Arbeitsfluid bevorzugt Silikon-basiert sein, insbesondere ein Silikonöl sein. Ein solches Silikonöl sollte ein synthetisches Silikonöl sein und kann beispielsweise Polydimethylphenylsiloxan sein, siehe hierzu die WO 2006/024451 A1. Derartige Silikonöle werden vorteilhaft für entsprechende Ausdehnungssysteme verwendet. Es kann auch eine Art Silikonkautschuk sein, für den es drei mögliche Vernetzungsmöglichkeiten zum Verhärten oder sogar Aushärten gibt.

Eine erste Vernetzungsmöglichkeit ist eine Platin-katalysierte Additionsvernetzung. Hier können Si-H-Gruppen eines Vernetzers bzw. des Aktivierungsmaterials mit den Vinylgruppen des Arbeitsfluids bzw. Polymers unter Bildung eines dreidimensionalen Netzwerks reagieren. Derartige Materialien sind beispielsweise von der Firma Wacker Chemie AG erhältlich. Sie können Ein-Komponenten-Silikonkautschuktypen sein, die einen Platinkatalysator bereits enthalten, oder eben vorteilhaft Zwei-Komponenten-Typen sein. Bei diesen kann der Vernetzer als Aktivierungsmaterial noch von dem Platinkatalysator im Arbeitsfluid getrennt sein. Alternativ kann ein Platinkatalysator getrennt sein von einem Vernetzer, der bereits im Arbeitsfluid enthalten ist. Hierbei ist vorteilhaft vorgesehen, wie es auch allgemein gelten kann, dass das Aktivierungsmaterial eine Beschichtung ist, die bereichsweise oder vollständig auf das Ausdehnungssystem aufgebracht werden kann, insbesondere auf die Fluidleitung. Vorteilhaft können noch mögliche Verbindungsbereiche zwischen der Fluidleitung alleine und dem Ausdehnungsbehälter und/oder dem Vorratsbehälter mit dem Aktivierungsmaterial versehen sein, da hier eine Bruchgefahr mit Undichtigkeit noch relativ groß ist. Auch Ausdehnungsbehälter und/oder Vorratsbehälter selbst können das Aktivierungsmaterial aufweisen, wenn es eine Beschichtung ist.

Eine weitere Vernetzungsmöglichkeit ist eine Peroxidvernetzung, bei der organische Peroxide eingesetzt werden. Sie zerfallen bei erhöhter Temperatur, die durch das Aktivierungsmaterial erzeugt werden kann, in hochreaktive Radikale, welche die chemische Vernetzung der Polymerketten bewirken. Dadurch entsteht ein hochelastisches dreidimensionales Netzwerk. Auch hierfür wird vorteilhaft ein Silikonmaterial verwendet. Auch hierfür sind die Materialien von der Firma Wacker Chemie AG erhältlich, insbesondere Peroxidvernetzer als Pasten.

Eine nochmals alternative Veränderung des Arbeitsfluids durch das Aktivierungsmaterial kann eine Kondensationsvernetzung als weitere Vernetzungsmöglichkeit sein. Dabei können die endständigen Hydroxygruppen des Polymers des Arbeitsfluids mit einem Siloxanvernetzer unter Abspaltung kleiner flüchtiger Verbindungen wie Alkohol, Essigsäure oder Amin reagieren. Durch diese Abspaltung kommt es im Gegensatz zu den vorgenannten additionsvernetzenden Silikonkautschuken zu einem Materialschwund und somit einer Volumenverringerung von ca. 3 Vol.-%. Diese kondensationsvernetzende Vulkanisierung kann durch zinnorganische oder titanorganische Verbindungen unter Anwesenheit oder Kontakt mit geringen Mengen Wasser katalysiert werden. Hierfür kann möglicherweise sogar schon die Luftfeuchtigkeit ausreichen. Eine Vulkanisation ist bereits bei Raumtemperatur möglich. Die Firma Wacker Chemie AG bietet gebrauchsfertige Ein-Komponenten-Silikonkautschuke als RTV-1 an, die bereits unter Einwirkung von Luftfeuchtigkeit vulkanisieren, also wenn das Arbeitsfluid durch die Undichtigkeit austritt. Alternativ sind auch schnell aushärtende Zwei-Komponenten-Typen erhältlich, bei denen die zweite notwendige Komponente dann im Aktivierungsmaterial enthalten ist. Dieses ist eine Beschichtung, mit der das Arbeitsfluid erst dann in Kontakt kommt, wenn die Undichtigkeit oder ein Bruch bzw. ein Loch im Ausdehnungssystem auftreten.

In weiterer Ausgestaltung der Erfindung kann zusätzlich vorgesehen sein, dass das Arbeitsfluid nicht nur mit dem Aktivierungsmaterial alleine zusammenwirkt, sondern neben Wasser bzw. Luftfeuchtigkeit auch Sauerstoff die Veränderung des Arbeitsfluids bzw. die Reaktion des Aktivierungsmaterials mit dem Arbeitsfluid bewirkt und/oder zusätzlich verstärkt. Dies kann sowohl für eine Veränderung nur der Fließfähigkeit bzw. der Viskosität des Arbeitsfluids gelten als auch insbesondere hinsichtlich eines Volumens.

Nachdem die grundsätzlichen Vorgänge chemischer und/oder physikalischer Natur erläutert worden sind, soll im Folgenden darauf eingegangen werden, wie das Ausdehnungssystem sozusagen konstruktiv aufgebaut sein kann. Es weist eben vorteilhaft ein Schaltmittel auf zusätzlich zu dem Ausdehnungsbehälter und der Fluidleitung, das mechanisch wirkverbunden ist mit diesem Ausdehnungsbehälter. Diese Wirkverbindung ist vorgesehen zur Betätigung eines Schaltvorgangs des Schaltmittels bei einem einstellbaren Betätigungspunkt, wie dies allgemein von dem eingangs genannten Thermostat bekannt ist. Neben dem Arbeitsfluid in dem Ausdehnungsbehälter und in der Fluidleitung weist das Ausdehnungssystem ein Aktivierungsmaterial auf, welches die vorgenannten Eigenschaften aufweist, bei Kontakt mit dem Arbeitsfluid oder bei Vermischung mit dem Arbeitsfluid eine Veränderung hinsichtlich Volumen und/oder Fließfähigkeit bzw. Viskosität hervorzurufen, insbesondere beim Arbeitsfluid selbst, möglicherweise aber auch bei sich selbst. Grundsätzlich ist es zwar möglich, dass das Aktivierungsmaterial dem Arbeitsfluid beigemischt ist und die beiden derart bei Kontakt mit Sauerstoff und/oder Feuchtigkeit in der Luft reagieren, wenn sie durch eine Undichtigkeit aus dem Ausdehnungssystem austreten und an die Luft gelangen. Vorteilhaft ist das Aktivierungsmaterial aber nicht dem Arbeitsfluid beigemischt, sondern auf eine Oberfläche oder einen Bereich des Ausdehnungssystems aufgebracht. Hierfür bietet sich, wie zuvor angesprochen worden ist, zumindest eine Oberfläche der Fluidleitung an, bevorzugt der gesamten Fluidleitung. Zusätzlich können auch noch Bereiche einer Verbindung der Fluidleitung mit dem Ausdehnungsbehälter, möglicherweise auch mit einem Vorratsbehälter an einem anderen freien Ende der Fluidleitung, das Aktivierungsmaterial aufweisen. Ein solcher Vorratsbehälter kann vorteilhaft in einen Bereich eingesetzt werden oder dort angebracht werden, wo eine Temperaturerfassung erfolgen soll, beispielsweise relativ nahe zu einer Heizeinrichtung. Durch die relativ große Menge an Arbeitsfluid in diesem Vorratsbehälter, beispielsweise von 0,5 cm³ bis zu 2 cm³ oder sogar bis zu 10 cm³, kann bei einer relativ dünnen Fluidleitung mit einem Innendurchmesser von weniger als 2 mm eine sozusagen verstärkte Ausdehnung und Bewegung am Ausdehnungsbehälter hervorgerufen werden.

Es ist möglich, das Aktivierungsmaterial auf der Außenseite des Ausdehnungssystems bzw. zumindest der Fluidleitung aufzubringen. Dies erleichtert zum einen die Aufbringung des Aktivierungsmaterials und zum anderen kann dadurch eine mögliche Zusammenwirkung mit Luft verbessert oder sogar überhaupt erst ermöglicht werden. Das Aktivierungsmaterial kann dann als eine Art Lack oder Beschichtung aufgebracht werden. Bei einem Verhärten oder Aushärten des Arbeitsfluids wird dann die Undichtigkeit sozusagen von außen abgedeckt oder abgedichtet.

In einer grundsätzlich anderen Ausgestaltung der Erfindung kann das Aktivierungsmaterial nur innerhalb des Ausdehnungssystems vorgesehen sein. Vorteilhaft ist es dabei nur auf einer Innenseite des Ausdehnungssystems vorgesehen, insbesondere der Fluidleitung, möglicherweise aber auch des Vorratsbehälters. Eine derartige Beschichtung der Innenseite mit Aktivierungsmaterial ist auch möglich, wenngleich technisch eventuell etwas aufwändiger. Möglich ist dies aber auch. Entweder kann bei möglichem direktem Kontakt des Arbeitsfluids mit dem Aktivierungsmaterial ein System vorgesehen sein, das erst dann die Veränderung hinsichtlich Volumen und/oder Fließfähigkeit bzw. Viskosität bewirkt, wenn das Arbeitsfluid unter Kontakt mit dem Aktivierungsmaterial aus dem Ausdehnungssystem an einer Undichtigkeit austritt und mit Sauerstoff und/oder Wasser in der Luft zusammenwirkt. Alternativ sollte auf der Beschichtung mit Aktivierungsmaterial auf der Innenseite noch eine weitere Abdeckschicht aufgebracht werden, die das Aktivierungsmaterial vollständig bedeckt derart, dass das Arbeitsfluid eben im normalen Betrieb des Ausdehnungssystems nicht mit dem Aktivierungsmaterial in Kontakt kommt. Erst wenn eine Undichtigkeit im Ausdehnungssystem auftritt, welche sich dann natürlich auch durch die Beschichtung mit Aktivierungsmaterial und Abdeckschicht zieht, insbesondere ein Riss oder ein Bruch, kann das Arbeitsfluid gerade wegen der zerstörten Abdeckschicht mit dem Aktivierungsmaterial in Kontakt kommen. Dann setzt deren beschriebenes Zusammenwirken ein. So kann auch die gewünschte und erfindungsgemäße Veränderung im Ausdehnungssystem bewirkt werden, wobei durch das Vorsehen des Aktivierungsmaterials innen im Ausdehnungssystem ein noch besseres Zusammenwirken mit dem Arbeitsfluid auf direkterem Wege möglich ist, da nicht erst sozusagen durch die Stelle der Undichtigkeit hindurch in das Innere des Ausdehnungssystems hinein gewirkt werden muss.

In nochmals weiterer grundsätzlicher Ausgestaltung der Erfindung kann vorgesehen sein, dass ein Aktivierungsmaterial verkapselt bzw. eingeschlossen ausgebildet ist, wobei es in eine Außenhülle aus Hüllmaterial verkapselt ist. Als besonders vorteilhaft werden hier sogenannte Mikrokapseln angesehen, die bekannte Durchmesser von weniger als 2 mm aufweisen, insbesondere weniger als 1 mm oder sogar weniger als 100 µm. Dieses verkapselte bzw. eingeschlossene Aktivierungsmaterial kann dann entweder überall im Ausdehnungssystem vorhanden sein, vorteilhaft aber zumindest auf alle Fälle auch im Ausdehnungsbehälter. Der Vorteil der Anbringung im Ausdehnungsbehälter ist der, dass dort auch größere Verkapselungsformen von 1 mm oder sogar 2 mm verwendet werden können, evtl. sogar auch noch größer. Die Verkapselung ist dabei derart ausgebildet, dass das Aktivierungsmaterial nicht in Kontakt mit dem Arbeitsfluid kommt. Vorteilhaft ist die Verkapselung auch derart ausgebildet, dass bei einer Volumenverringerung des Ausdehnungsbehälters über ein definiertes Maß hinaus, insbesondere wenn sich zwei gegenüberliegende Behälterwände sehr weit annähern über dieses definierte Maß hinaus, die Verkapselung aufbricht bzw. zerstört wird. Dann kann das Aktivierungsmaterial aus der Verkapselung heraustreten bzw. mit dem Arbeitsfluid in Kontakt kommen und sich damit vermischen. Dann kann es wiederum derart zusammenwirken, dass das Volumen des Arbeitsfluids bzw. das Volumen innerhalb des Ausdehnungssystems und insbesondere innerhalb des Ausdehnungsbehälters vergrößert wird. Diese Volumenvergrößerung ist eingangs beschrieben worden als mindestens 2 %, vorzugsweise mindestens 10 %. Dadurch kann ein Schalten von vorgenannten Schaltmitteln zum Abschalten einer Heizeinrichtung odgl. als Sicherheitsmaßnahme vorgesehen sein, wodurch eine unmittelbare Gefahrensituation ausgeräumt werden kann. Vorteilhaft kann dann noch vorgesehen sein, dass, möglicherweise nach dem Aufbrechen weiterer, insbesondere kleinerer, Verkapselungen mit Aktivierungsmaterial darin, welches insbesondere durch die Volumenvergrößerung selbst erfolgt, die Fließfähigkeit des Arbeitsfluids stark verringert wird bzw. die Viskosität stark erhöht wird. Alternativ und/oder zusätzlich kann die Volumenvergrößerung irreversibel sein, so dass sich der Ausdehnungsbehälter selbst bei weiterem Auslaufen des Arbeitsfluids aus einer Undichtigkeit irgendwo im Ausdehnungssystem nicht wieder zusammenzieht aufgrund eines Druckabfalls im Inneren. Somit kann sozusagen die Volumenvergrößerung fixiert oder unveränderbar gemacht werden, wodurch sich der Ausdehnungsbehälter nicht wieder zusammenziehen oder verkleinern kann zum möglichen erneuten Einschalten eines Schaltmittels zum Aktivieren einer Heizeinrichtung.

Dabei ist es möglich, dass sich bei dem Zusammenwirken von Aktivierungsmaterial und Arbeitsfluid entweder das Arbeitsfluid selbst in seinem Volumen vergrößert, beispielsweise aufschäumt. Alternativ kann sich auch das Aktivierungsmaterial in seinem Volumen vergrößern bzw. aufschäumen, was zum gleichen Ziel führt, nämlich der gewünschten Volumenvergrößerung insgesamt innerhalb des Ausdehnungssystems.

Bei einer vorgenannten möglichen Ausgestaltung der Erfindung kann vorgesehen sein, dass der Ausdehnungsbehälter eine verschließbare Öffnung aufweist, durch welche verkapseltes Aktivierungsmaterial eingebracht werden kann. Dies ist insbesondere dann von Vorteil, wenn dieses verkapselte Aktivierungsmaterial eher im oberen vorgenannten Größenbereich liegt, also beispielsweise Durchmesser von 1 mm und mehr aufweist. Dann wäre möglicherweise ein Einbringen über eine angeschlossene Fluidleitung in den Ausdehnungsbehälter nicht mehr möglich. Vorteilhaft ist die Öffnung derart druckdicht verschließbar, dass sie einem Druck standhält, der mindestens 20 % höher ist als der Arbeitsdruck des Ausdehnungssystems. Da ansonsten aber ein erneutes Öffnen als nicht mehr notwendig angesehen wird, können entsprechende rastende und gut abdichtende Verschlüsse verwendet werden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombination bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. In den Zeichnungen zeigen:
- Fig. 1: eine vereinfachte Schnittdarstellung durch einen Thermostatschalter, der das erfindungsgemäße Ausdehnungssystem und eine Schaltfeder aufweist,
- Fig. 2: Schnittdarstellungen durch eine Fluidleitung des Ausdehnungssystems aus Fig. 1 mit einer Schicht aus Aktivierungsmaterial außen in vier Schritten bei Auftreten eines Risses,
- Fig. 3: Schnittdarstellungen durch eine weitere Fluidleitung aus Fig. 1 mit einer Schicht aus Aktivierungsmaterial innen in vier Schritten bei Auftreten eines Risses,
- Fig. 4: Schnittdarstellungen durch eine weitere Fluidleitung aus Fig. 1 mit einer Schicht aus Aktivierungsmaterial innen, die von einer Abdeckschicht nach innen nochmals abgedeckt ist, in vier Schritten bei Auftreten eines Risses und
- Fig. 5: eine vergrößerte Schnittdarstellung durch den Ausdehnungsbehälter des Ausdehnungssystems aus Fig. 1 in drei Schritten bei Auftreten einer Undichtigkeit im Ausdehnungssystem.

### Detaillierte Beschreibung der Ausführungsbeispiele

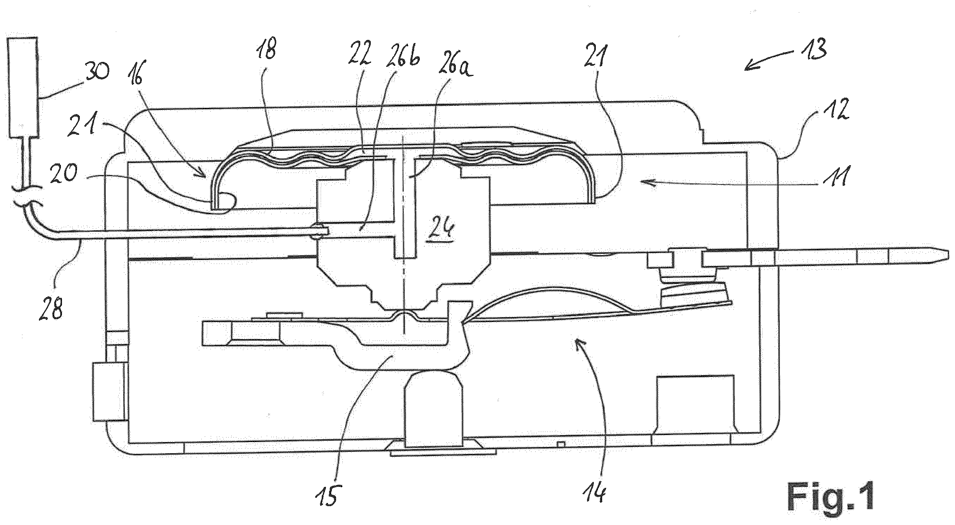

Die Fig. 1 zeigt ein erfindungsgemäßes Ausdehnungssystem 11 in einem Gehäuse 12 eines Thermostatschalters 13. Dieser soll grundsätzlich einem aus dem Stand der Technik bekannten Thermostatschalter entsprechen, wie er auch als Temperaturregler aus beispielsweise der vorgenannten EP 0005191 A1 bekannt ist. Damit kann vorteilhaft ein Backofen bzw. dessen Heizeinrichtung geregelt werden. Der Thermostatschalter 13 weist eine Schaltfeder 14 als Schaltmittel auf, auf die ein Ausdehnungsbehälter 16 bestehend aus einer ersten Schale 18 oben und einer zweiten Schale 20 unten einwirkt. Zwischen der ersten Schale 18 und der zweiten Schale 20 ist ein Innenraum 22 gebildet, so dass sich eine Art Dose bildet. An der unteren zweiten Schale 20 ist ein Druckstück 24 befestigt, welches auf die Schaltfeder 14 wirkt bzw. drückt und dazu an dieser anliegt. Es ist aus der Fig. 1 leicht zu erkennen, dass eine geringfügige Bewegung des Druckstücks 24 nach unten, weil sich die zweite Schale 20 auch nach unten bewegt hat, die Schaltfeder 14 zum Öffnen bringt. Die Schaltfeder 14 ist als Schnappfeder ausgebildet, wie dies auch aus dem vorgenannten Stand der Technik bekannt ist. Der Ausdehnungsweg kann in der Praxis 1 mm oder 2 mm betragen. Der Ausdehnungsbehälter 16 ist mittels der oberen Schale 17 fest im Gehäuse 12 angeordnet, insbesondere in einem zentralen Bereich der oberen ersten Schale 18, so dass bei Ausdehnung des Ausdehnungsbehälters 16 die obere erste Schale 18 ortsfest bleibt. Somit bewegt sich hauptsächlich die zweite Schale 20 bei Ausdehnung des Ausdehnungsbehälters 16 nach unten und damit auch das zentral daran befestigte Druckstück 24.

Im Inneren weist das Druckstück 24 eine vertikale Innenbohrung 26a und eine darin übergehende horizontale Innenbohrung 26b auf, die nach links aus dem Druckstück 24 austritt. In diese Innenbohrung 26b ist von links kommend eine Fluidleitung 28 ein Stück hineingesteckt und fest sowie dicht damit verbunden, beispielsweise festgelötet oder festgeschweißt. Alternativ kann es auch eine dichtende Pressung sein. Dies ist jeweils bekannt.

Die Fluidleitung 28 führt nach links aus dem Gehäuse 12 des Thermostatschalters 13 heraus mit an sich möglicher großer Länge. Diese Länge kann zwischen 10 cm und 1 m oder 2 m betragen, unter Umständen sogar noch mehr. Der Außendurchmesser der Fluidleitung kann bei etwa 2 mm liegen und ihr Innendurchmesser bei etwa 1 mm. Somit kann sie als eine Art Kapillarrohr angesehen werden. Sie besteht vorteilhaft aus Metall, das leicht biegbar ist.

Am Ende der Fluidleitung 28 ist ein Vorratsbehälter 30 vorgesehen, der auch als hauptsächlicher Fühler für eine Temperaturerfassung angesehen werden kann. Der Vorratsbehälter 30 kann beispielsweise 3 cm bis 5 cm lang sein und einen Durchmesser von 5 mm bis 10 mm aufweisen. Er besteht auch aus Metall, so dass die Fluidleitung 28 in einem Übergangsbereich mit ihm verlötet oder verschweißt sein kann.

Aus der Fig. 1 ist zu ersehen, dass das Ausdehnungssystem 11 im Inneren von Ausdehnungsbehälter 16, Druckstück 24, Fluidleitung 28 und Vorratsbehälter 30 durchgehend miteinander verbunden ist. In diesen Innenraum ist ein Arbeitsfluid gemäß einer vorgenannten Ausgestaltung eingefüllt, so dass es diesen Innenraum vollständig füllt ohne Lufteinschlüsse. Wie eingangs beschrieben worden ist, ändert sich das Volumen des Arbeitsfluids abhängig von der Temperatur, bei zunehmender Temperatur vergrößert sich das Volumen und bei abnehmender Temperatur verringert es sich. Auf bekannte Art und Weise und bei Fixierung des Ausdehnungsbehälters 16 in der Mitte der oberen ersten Schale 18 bewirkt dies bei Temperaturerhöhung eine Bewegung des Druckstücks 24 nach unten bzw. auf die Schaltfeder 14 zu, so dass sie diese ab einem bestimmten Punkt betätigt und damit öffnet. Bei Verringerung der Temperatur ist es genau umgekehrt. So erfolgt eben eine bekannte Temperaturregelung mittels des Thermostatschalters 13. Auf nicht dargestellte Art und Weise kann die Relativposition zwischen Ausdehnungsbehälter 16 bzw. dem Mittelbereich der oberen ersten Schale 18 und der Schaltfeder 14 bzw. einer dieser tragenden Halterung 15 verändert werden, beispielsweise durch einen nicht dargestellten Drehknebel. Damit kann der Schaltpunkt der Schaltfeder 14 auf eine gewünschte Temperatur eingestellt werden.

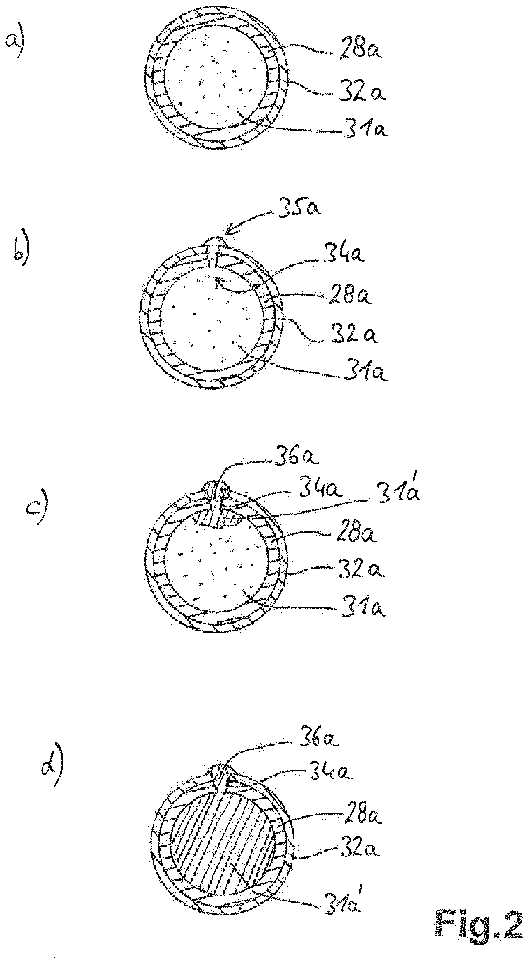

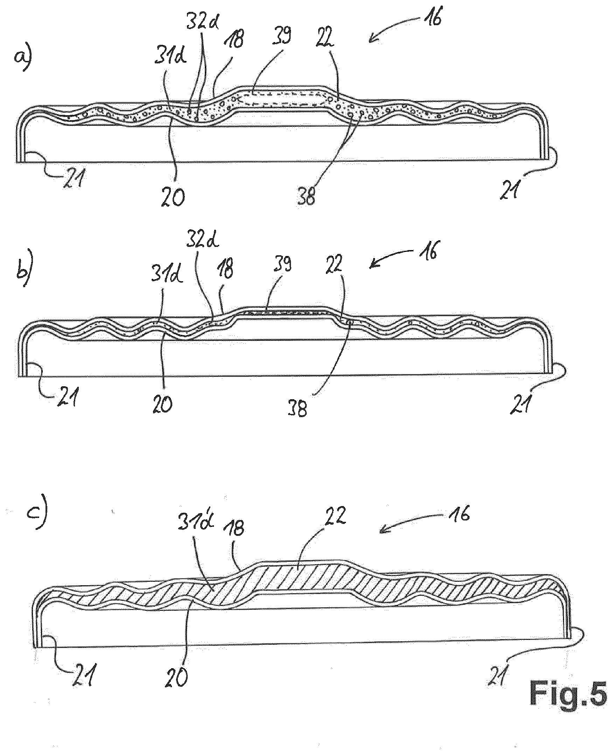

Im Folgenden werden anhand der Figuren die unterschiedlichen grundsätzlichen Ausgestaltungen der Erfindung erläutert, wie sie zuvor beschrieben worden sind. Die Fig. 2 bis 4 zeigen die erste grundsätzliche Ausgestaltung der Erfindung, bei der ein Aktivierungsmaterial auf eine Außenseite oder eine Innenseite der Fluidleitung 28 aufgebracht ist. Die Fig. 5 zeigt die andere zweite grundsätzliche Ausgestaltung der Erfindung, bei der verkapseltes Aktivierungsmaterial im Ausdehnungsbehälter 16 selbst vorgesehen ist zusammen mit dem Arbeitsfluid.

In der Fig. 2a) ist ganz oben ein Schnitt durch eine intakte Fluidleitung 28 dargestellt, die in dem Ausdehnungssystem 11 der Fig. 1 verwendet ist. Die Fluidleitung 28a besteht eben aus Metall und weist an ihrer Außenseite eine Schicht 32a aus Aktivierungsmaterial auf. Diese Schicht 32a bedeckt die Fluidleitung 28 vollumfänglich und entlang ihrer gesamten Länge, vorteilhaft auch den Vorratsbehälter 30 oder zumindest eine Verbindung damit sowie möglichst auch eine Verbindung der Fluidleitung 28 mit dem Druckstück 24. Im Inneren der Fluidleitung 28 befindet sich Arbeitsfluid 31a, vorteilhaft ein Silikonöl, wie es eingangs beispielhaft genannt worden ist. Das Aktivierungsmaterial 32a und das Arbeitsfluid 31a sind so ausgebildet, dass direkt bei Zusammenwirken oder Vermischen mit dem Arbeitsfluid 31a die Fließfähigkeit des Arbeitsfluids 31a stark verringert bzw. dessen Viskosität stark erhöht wird. Dies kann entweder durch eine Platin-katalysierte oder mit anderen Katalysatoren katalysierte Additionsvernetzung erfolgen, durch eine Peroxidvernetzung oder durch eine Kondensationsvernetzung, wie sie eingangs erläutert worden sind. Die entsprechenden spezifischen Vernetzer sind beispielsweise bei der Firma Wacker Chemie AG erhältlich, wie zuvor ausgeführt worden ist.

Tritt in der Fluidleitung 28 an beliebiger Stelle eine Undichtigkeit auf, in der Fig. 2b) als Riss 34a dargestellt, so ergibt sich hier zu allererst ein Austritt 35a von Arbeitsfluid 31a. Dies kommt vor allem durch den relativ großen Innendruck innerhalb des Ausdehnungssystems 11 zustande. Da der Riss 34a sowohl durch die Fluidleitung 28a an sich als auch durch die außen daran vorgesehene Schicht 32a aus Aktivierungsmaterial geht, kommt das austretende Arbeitsfluid 31a mit diesem Aktivierungsmaterial 32a in Berührung. So kann die erläuterte Vernetzung des Arbeitsfluids 31a angestoßen werden. In der Fig. 2c) ist dies so dargestellt, dass hier das Arbeitsfluid 31a nicht nur zäher bzw. weniger flüssig wird, sondern sogar verhärtet. Dadurch bildet sich ein Pfropfen 36a, der den Riss 34a verschließt. Hier ist zu sehen, dass sich die Wirkung des Vernetzens in das Innere der Fluidleitung 28a hinein und somit zumindest auch in das unmittelbar in der Nähe befindliche Arbeitsfluid 31 hinein fortsetzt. Dadurch ist dieser Pfropfen 36a auf der Innenseite des Risses 34a verbreitert, was verhindert, dass er durch einen möglichen Anstieg des Drucks im Innenraum nach außen herausgedrückt wird. Damit ist der Riss 34a abgedichtet, und bis auf etwas sozusagen verloren gegangene Menge an Arbeitsfluid 31a wäre das Ausdehnungssystem 11 in diesem Falle wieder arbeitsfähig. Der geringe Verlust an Arbeitsfluid 31a bewirkt sozusagen eine Temperaturverstellung, die aber in aller Regel noch nicht so groß sein wird, dass sich auf einmal ein gefährlicher Zustand an einer mit dem Thermostatschalter 13 betriebenen und hier nicht dargestellten Heizeinrichtung, beispielsweise in einem Backofen, ergeben könnte.

In der Fig. 2d) ist als mögliche Weiterung noch dargestellt, dass die Vernetzung des Arbeitsfluids 31a nicht zwingend in der Nähe des Risses 34a stoppen muss, sondern sich nach innen ausdehnen kann, quasi wie eine verstärkte Reaktion oder sogar eine Art Kettenreaktion. Wenn dann das gesamte Innere der Fluidleitung 28 mit zäherem Arbeitsfluid 31a gefüllt ist, möglicherweise sogar mit verhärtetem Arbeitsfluid, kann es sein, dass das Ausdehnungssystem 11 nicht mehr arbeitet. In diesem Fall ist es vorteilhaft, wenn zusätzlich zur Änderung der Fließfähigkeit bzw. Viskosität des Arbeitsfluids 31a während dieser Veränderung eine Volumenvergrößerung des Arbeitsfluids erfolgt. Dadurch kann, wie ein Blick in die Fig. 1 zeigt, die Schaltfeder 14 geöffnet werden. Dafür reicht eine Volumenvergrößerung des Arbeitsfluids von wenigen Prozent, beispielsweise 1 % bis 5 %. Wenn dann dieses in seinem Volumen vergrößerte Arbeitsfluid, das die Schaltfeder geöffnet hat, noch sozusagen verhärtet wird, so wird dieser Zustand sozusagen fixiert und die Schaltfeder 14 bleibt geöffnet. Dies wäre also ein Fehlerfall, so dass der Thermostatschalter 13 nicht mehr bedienbar oder benutzbar ist. Es ist aber ein gesicherter bzw. ungefährlicher Fehlerfall.

Für die Funktion gemäß Fig. 2 des Zusammenwirkens des Arbeitsfluids 31a mit der Schicht 32a aus speziellem Aktivierungsmaterial kann in möglicher Weiterung noch vorgesehen sein, dass die Veränderung des Arbeitsfluids 31a dadurch unterstützt wird, dass das Arbeitsfluid schließlich mit Luft in Berührung kommt. Somit kann die Veränderung durch Sauerstoff und/oder Wasser in der Luft überhaupt hervorgerufen oder verstärkt werden.

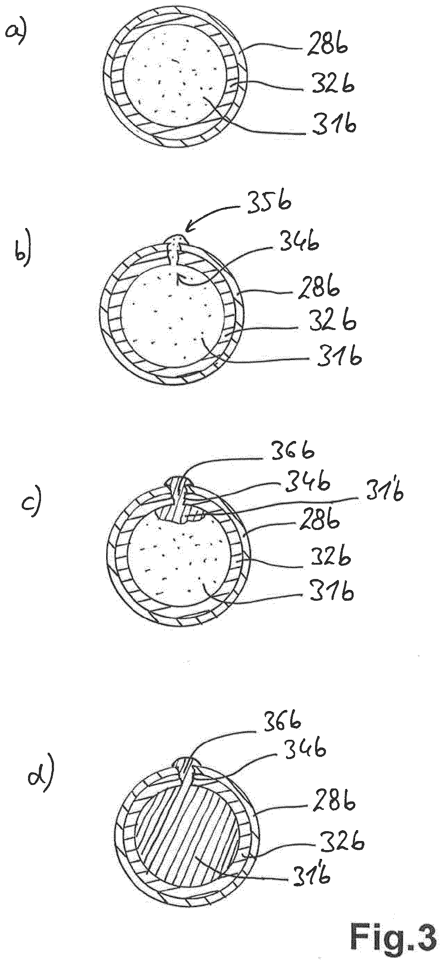

In der Fig. 3 ist ähnlich wie in Fig. 2 eine Fluidleitung 28b dargestellt, die allerdings auf ihrer Innenseite mit einer Schicht 32b aus Aktivierungsmaterial versehen ist. Ein Arbeitsfluid 31b ist eingefüllt, siehe Fig. 3a).

Ergibt sich nun gemäß Fig. 3b) ein Riss 34b in der Fluidleitung 28b, der dann natürlich auch innen durch die Schicht 32b verläuft, tritt Arbeitsfluid 31b aus und bildet wiederum einen Austritt 35b. In diesem Bereich austretendes Arbeitsfluid 31b kann Partikel oder Moleküle der Schicht 32b aus Aktivierungsmaterial mit nach außen transportieren, wo diese Mischung mit Luft bzw. Sauerstoff und Wasser in Kontakt kommt. In diesem Fall sind Arbeitsfluid 31b und Aktivierungsmaterial der Schicht 32b so ausgebildet, dass sie bei Kontakt mit Sauerstoff und/oder Wasser die erfindungsgemäße Veränderung des Arbeitsfluids 31b bewirken. Somit kann dessen Fließfähigkeit verringert bzw. seine Viskosität erhöht werden. Dies kann so weit gehen, dass sich eben wiederum ein Pfropfen 36b bildet, der den Riss 34b nach innen abdeckt bzw. überdeckt und ihn somit verschließt. Dies kann gemäß Fig. 3d) sogar so weit gehen, dass sich ein Großteil oder das gesamte Arbeitsfluid 31b, zumindest über einen gewissen Längenbereich nahe dem Riss 34b, verändert oder verhärtet. Wie zuvor zu der Fig. 2d) beschrieben, erfolgt dies vorteilhaft zusammen mit einer Vergrößerung des Volumens des Arbeitsfluids bzw. einer Ausdehnung.

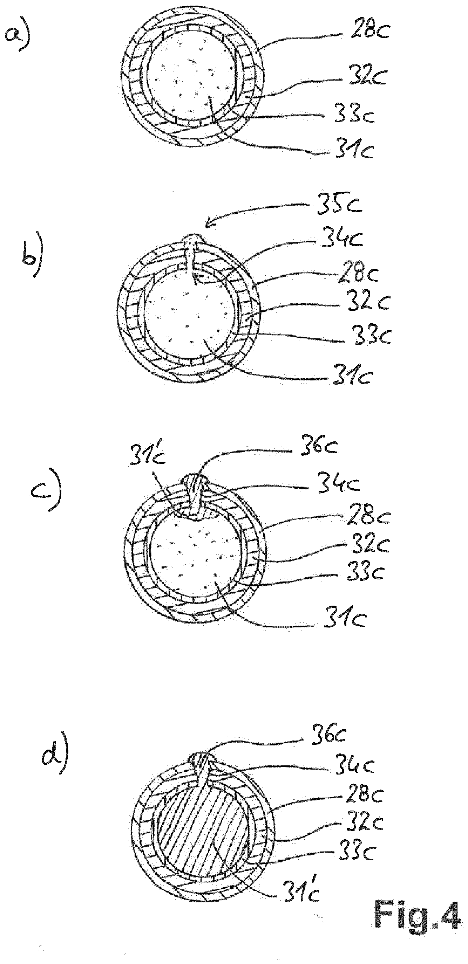

Eine nochmals etwas andere Ausgestaltung der Erfindung ist in den Fig. 4a) bis 4d) dargestellt. Eine Fluidleitung 28c aus Metall ist hier gemäß Fig. 4a) auf ihrer Innenseite mit einer Schicht 32c aus Aktivierungsmaterial beschichtet ähnlich wie dies zur Fig. 3 erläutert worden ist. Diese Schicht 32c ist nach innen aber noch einmal vollständig mit einer Abdeckschicht 33c beschichtet. Diese Abdeckschicht 33c kann grundsätzlich verschiedenartig ausgebildet sein, wichtig ist eben nur, dass sie mit der Schicht 32c aus Aktivierungsmaterial nicht zusammenwirkt und auch nicht mit dem Arbeitsfluid 31c. Des Weiteren darf sie nicht durchlässig sein für das Arbeitsfluid 31c.

Tritt nun gemäß Fig. 4b) erneut ein Riss 34c in der Fluidleitung 28c und auch in den Schichten 32c und 33c auf, so tritt wiederum Arbeitsfluid 31c aus. Es ergibt sich der bekannte Austritt 35c. Da der Riss 34c eben auch durch die Abdeckschicht 33c verläuft und diese sozusagen öffnet, kann das Arbeitsfluid 31c auf dem Weg in den Riss 34c mit der Schicht 32c aus Aktivierungsmaterial in Kontakt kommen bzw. sich mit Molekülen oder Partikeln daraus vermischen. Dies kann dann mit einer Reaktion ähnlich wie zur Fig. 2a) bis 2d) beschrieben zu einer Verhärtung des Arbeitsfluids 31c führen bzw. dazu führen, dass die Fließfähigkeit des Arbeitsfluids 31c stark verringert wird bzw. seine Viskosität stark erhöht wird. So kann sich wiederum der in Fig. 4c) dargestellte Pfropfen 36c bilden. Dieser kann fest werden und sollte auf alle Fälle den Riss 34c sicher abdichten.

Wie in Fig. 4d) dargestellt ist, kann entsprechend Fig. 2d) eine durchgehende Veränderung des Arbeitsfluids 31c in einem größeren Bereich um den Riss 34c herum stattfinden. Vorteilhaft erfolgt damit auch die zuvor beschriebene Ausdehnung bzw. Vergrößerung des Volumens zum Durchführen des Schaltvorgangs an der Schaltfeder 14.

Bei dem Ausführungsbeispiel der Fig. 4 können Arbeitsfluid 31c und Schicht 32c aus Aktivierungsmaterial gewählt sein wie in Fig. 2. Die Abdeckschicht 33 kann beispielsweise ein Schutzlack sein oder eine Harzschicht.

Erfolgt bei dem Ausführungsbeispiel der Fig. 4 eine Reaktion zwischen Arbeitsfluid und Aktivierungsmaterial in der Schicht 32c sehr schnell bzw. so schnell, dass sich gar kein nach außen überstehender Pfropfen 36c bilden kann, stört dies auch nicht. Schließlich wird der Riss 34c auf alle Fälle von dem dann im Wesentlichen nach innen stehenden Pfropfen 36c verschlossen und möglichst abgedichtet.

In der Fig. 5 ist die zweite grundsätzliche Ausgestaltung der Erfindung beschrieben, bei der das Aktivierungsmaterial verkapselt bzw. eingeschlossen ausgebildet ist. Die Fig. 5a) zeigt den Ausdehnungsbehälter 16 aus Fig. 1 in Vergrößerung, allerdings nur den Ausdehnungsbehälter 16 ohne Druckstück 24 odgl.. Die obere erste Schale 18 und die untere zweite Schale 20 sind im umlaufenden Randbereich 21 fest miteinander verbunden, wie auch ein Vergleich mit Fig. 5b) und Fig. 5c) zeigt.

Ein Innenraum des Ausdehnungsbehälters 16 ist gefüllt mit Arbeitsfluid 31d, erkennbar durch die Darstellung mit den kleinen Punkten. Gleichzeitig sind hier auch noch etwas größer dargestellte runde Mikrokapseln 38d eingefüllt, deren Durchmesser 200 µm bis 400 µm betragen kann. Die Mikrokapseln 38 können entweder sämtlich gleich sein und ein Aktivierungsmaterial 32d enthalten, welches bei Vermischung oder Kontakt mit dem Arbeitsfluid 31d die erfindungsgemäße Änderung der Fließfähigkeit bzw. Viskosität des Arbeitsfluids bewirkt. Derartige Materialien sind zuvor beschrieben worden. Ein Hüllmaterial der Außenhüllen der Mikrokapseln 38 kann aus geeignetem Material bestehen.

Möglicherweise kann zusätzlich zu den Mikrokapseln 38 noch ein Katalysatormaterial in das Arbeitsfluid 31d gegeben werden. Dieser Katalysator bewirkt dann zusammen mit dem Aktivierungsmaterial 32d in den Mikrokapseln 38 die genannte Veränderung. Dann kann das Aktivierungsmaterial ähnlich sein wie zuvor zur Fig. 2 beschrieben. Ein Katalysator kann Platin-basiert sein bzw. Platin aufweisen.

Alternativ ist in der Fig. 5a) im Mittelbereich eine Großkapsel 39 gestrichelt dargestellt. Diese kann eine Dicke von etwa 1 mm und einen Durchmesser von 2 mm bis 4 mm aufweisen. Ihre Dicke ist so gewählt, dass sich die beiden Schalen 18 und 20 im normalen Betrieb des Ausdehnungssystems 11 im Thermostatschalter 13 nicht näher einander annähern als diese Dicke, so dass die Großkapsel 39 während des normalen Betriebs nicht zerstört wird. Sie kann alleine oder zusammen mit den Mikrokapseln 38 vorgesehen sein.

In der Fig. 5b) ist dargestellt, was passiert, wenn ein Riss oder eine Undichtigkeit im Ausdehnungssystem 11 aufgetreten sind und dabei eine größere Menge an Arbeitsfluid 31d ausgetreten ist. Dann fällt der Ausdehnungsbehälter 16 relativ stark zusammen bzw. die beiden Schalen 18 und 20 nähern sich einander stark an. Dies bewirkt auf die Fig. 1 übertragen ein starkes Anheben des Druckstücks 24 nach oben und weg von der Schaltfeder 14, so dass diese weit davon entfernt ist, geöffnet zu werden. Verbleibt dieser Zustand, so wird eine mit dem Thermostatschalter 13 betriebene Heizeinrichtung nicht mehr abgeschaltet, auch wenn dies eigentlich erfolgen sollte. Daraus ergibt sich eben eine zuvor beschriebene kritische oder sogar gefährliche Situation.

Deswegen ist hier das Aktivierungsmaterial 32d so gewählt, dass es zusammen mit dem Arbeitsfluid 31, möglicherweise zusammen mit einem erwähnten Katalysator, eine Ausdehnung bzw. Volumenvergrößerung des Arbeitsfluids 31 bewirkt. Bewegen sich nämlich die beiden Schalen 18 und 20 gemäß der Fig. 5b) so weit zusammen, so werden diese Mikrokapseln 38 zerdrückt bzw. brechen auf und das Aktivierungsmaterial 32d mischt sich mit dem Arbeitsfluid 31. Wie beschrieben bewirkt es dessen Volumenvergrößerung, hier in erheblichem Maß, beispielsweise um das Doppelte. Dadurch werden die beiden Schalen 18 und 20 des Ausdehnungsbehälters 16 wiederum sehr weit auseinandergedrückt, weiter als in Fig. 5a), wie in Fig. 5c) zu sehen ist. Des Weiteren sollte dann noch vorgesehen sein, dass das Arbeitsfluid 31 verhärtet wird bzw. entweder nicht mehr zu der Undichtigkeit austreten kann oder aber den Ausdehnungsbehälter 16 nicht mehr verlassen kann, damit nicht erneut Arbeitsfluid 31 in größerem Maß durch die Undichtigkeit nach außen gedrückt wird, wodurch erneut ein Zusammenfallen des Ausdehnungsbehälters 16 bewirkt werden könnte. Möglicherweise kann es auch ganz ausgehärtet werden. Dann verbleibt die Schaltfeder 14 gemäß Fig. 1 im geöffneten Zustand. Ein mit dem Thermostatschalter 13 versehenes Elektrogerät kann dann zwar nicht mehr arbeiten bzw. nicht mehr mit der davon angesteuerten Heizeinrichtung heizen, aber eine gefährliche Situation kann vermieden werden als Hauptziel.

Aus dem Vergleich der Fig. 5a) bis 5c) ist zu sehen, dass der Vorteil der Verwendung einer einzigen Großkapsel 39 darin liegt, dass diese definiert im zentralen Bereich des Ausdehnungsbehälters 16 eingebracht werden kann, beispielsweise durch eine hier nicht dargestellte verschließbare Öffnung, beispielsweise durch Befestigen mit dem Druckstück 24 verschließbar. Zum Zerbrechen dieser Großkapsel 39 reicht in diesem Bereich eine Verringerung des Abstands der beiden Schalen 18 und 20. Hier herrschen aber bekannte und gut vorhersehbare Verhältnisse. So kann vor allem vermieden werden, dass in den radial äußeren Bereichen des Innenraums 22 nahe dem Randbereich 21 befindliche Mikrokapseln 38 nicht bereits unbeabsichtigt während des normalen Betriebs zerstört werden und sozusagen durch Aktivieren der Sicherheitsfunktion das Ausdehnungssystem 11 unbrauchbar machen können.

In einer nochmals weiteren Ausgestaltung der Erfindung kann vorgesehen sein, dass zwei unterschiedliche Aktivierungsmaterialien in den Mikrokapseln 38 enthalten sind. Dies könnten beispielsweise jeweils Natron und Essig sein. Nach dem Aufbrechen der Mikrokapseln vermischen sich diese und bewirken eine Reaktion zur Bildung von Gas, insbesondere Kohlenstoffdioxid. Auch dadurch wird sozusagen das Volumen im Innenraum 22 vergrößert bzw. das Arbeitsfluid 31d kann sozusagen aufgeschäumt werden und erfährt so eine deutliche Volumenvergrößerung.

Alternativ kann ein Ein-Komponenten-PU-Schaum in der einen Art von Mikrokapseln enthalten sein, und in der anderen Art von Mikrokapseln kann Wasser enthalten sein. Dies bietet sich an, wenn der PU-Schaum derart gewählt ist, dass er bei Kontakt mit Wasser aufschäumt, wie dies von PU-Schäumen zur Abdichtung von Türen und Fenstern beim Einbau bekannt ist, der bereits durch die Luftfeuchtigkeit aktiviert wird zum Aufschäumen.

Des Weiteren können auch Zwei-Komponenten-PU-Schäume verwendet werden, wozu ein PU-Material in der einen Art von Mikrokapseln enthalten sein kann, und in der anderen Art von Mikrokapseln kann ein Härter dafür enthalten sein. Deren Aufbrechen erfolgt jeweils wie zuvor beschrieben. Nach dem Aufbrechen und Vermischen verhärtet der PU-Schaum, vorteilhaft schäumt er zuvor auf bzw. vergrößert sein Volumen wie vorbeschrieben.

## Patentansprüche

1. Verfahren zum Verändern eines Arbeitsfluids (31) in einem Ausdehnungssystem (11) zur Temperaturerfassung mittels thermomechanischer Ausdehnung und Bewegung, wobei das Ausdehnungssystem (11)
- das Arbeitsfluid (31) enthält und
- ein Aktivierungsmaterial (32) zur Veränderung des Arbeitsfluids (31) aufweist, **dadurch gekennzeichnet, dass** das Aktivierungsmaterial (32) bei Kontakt mit dem Arbeitsfluid (31) oder bei Vermischung mit dem Arbeitsfluid dieses Arbeitsfluid verändert hinsichtlich seines Volumens und/oder seiner Fließfähigkeit.

2. Verfahren nach Anspruch 1, **dadurch gekennzeichnet, dass** das Aktivierungsmaterial (32a-c) nur die Fließfähigkeit des Arbeitsfluids (31a-c) verändert, wobei insbesondere das Aktivierungsmaterial ein Verhärten des Arbeitsfluids bewirkt, vorzugsweise ein Aushärten des Arbeitsfluids bewirkt.

3. Verfahren nach Anspruch 1, **dadurch gekennzeichnet, dass** das Aktivierungsmaterial (32d) zuerst das Volumen des Arbeitsfluids (31d) vergrößert, insbesondere durch Aufschäumen, und danach die Fließfähigkeit verringert, wobei vorzugsweise das Aktivierungsmaterial darauffolgend das in seinem Volumen vergrößerte Arbeitsfluid verhärtet, insbesondere dauerhaft aushärtet.

4. Verfahren nach einem der vorhergehenden Ansprüche, **dadurch gekennzeichnet, dass** das Aktivierungsmaterial (32a-c) das Arbeitsfluid (31a-c) vernetzt, wobei insbesondere das Arbeitsfluid Silikon-basiert ist, insbesondere ein Silikonöl ist.

5. Verfahren nach einem der vorhergehenden Ansprüche, **dadurch gekennzeichnet, dass** das Aktivierungsmaterial (32b) das Arbeitsfluid (31b) unter zusätzlicher Einwirkung von Sauerstoff verändert hinsichtlich eines Volumens und/oder einer Fließfähigkeit.

6. Ausdehnungssystem (11) zur Temperaturerfassung mittels thermomechanischer Ausdehnung und Bewegung, aufweisend:
- einen Ausdehnungsbehälter (16),
- eine längliche Fluidleitung (28), die mit dem Ausdehnungsbehälter (16) fluidleitend verbunden ist,
- ein Schaltmittel (14), das mechanisch wirkverbunden ist mit dem Ausdehnungsbehälter (16) zur Betätigung eines Schaltvorgangs des Schaltmittels bei einem einstellbaren Betätigungspunkt,
- ein Arbeitsfluid (31) in dem Ausdehnungsbehälter (16) und in der Fluidleitung (28), **dadurch gekennzeichnet, dass** das Ausdehnungsystem ein Aktivierungsmaterial (32) aufweist, das dazu ausgebildet ist, bei Kontakt mit dem Arbeitsfluid (31) oder bei Vermischung mit dem Arbeitsfluid dieses Arbeitsfluid (31) zu verändern hinsichtlich seines Volumens und/oder seiner Fließfähigkeit.

7. Ausdehnungssystem nach Anspruch 6, **dadurch gekennzeichnet, dass** das Ausdehnungssystem (11) dazu ausgebildet ist, damit das Verfahren nach einem der Ansprüche 1 bis 5 durchzuführen.

8. Ausdehnungssystem nach Anspruch 6 oder 7, **dadurch gekennzeichnet, dass** das Aktivierungsmaterial (32b) derart ausgebildet ist, dass es gemeinsam mit Sauerstoff und/oder Wasser die Veränderung des Arbeitsfluids (31b) bewirkt.

9. Ausdehnungssystem nach einem der Ansprüche 6 bis 8, **dadurch gekennzeichnet, dass** das Aktivierungsmaterial (32a) derart ausgebildet ist, dass es gemeinsam mit einem Katalysator, vorzugsweise Platin, die Veränderung des Arbeitsfluids (31a) bewirkt.

10. Ausdehnungssystem nach einem der Ansprüche 6 bis 9, **dadurch gekennzeichnet, dass** das Aktivierungsmaterial (32a-c) nicht dem Arbeitsfluid (31a-c) beigemischt ist, sondern auf eine Oberfläche des Ausdehnungssystems (11) aufgebracht ist, insbesondere auf eine Oberfläche der Fluidleitung (28).

11. Ausdehnungssystem nach Anspruch 10, **dadurch gekennzeichnet, dass** das Aktivierungsmaterial (32d) auch auf eine Oberfläche eines Vorratsbehälters (30) an einem Ende der Fluidleitung (28) aufgebracht ist, das von dem Ende mit dem Ausdehnungsbehälter (16) entfernt liegt bzw. abgewandt ist.

12. Ausdehnungssystem nach Anspruch 10 oder 11, **dadurch gekennzeichnet, dass** das Aktivierungsmaterial (32) auf der Außenseite der Fluidleitung (28), vorzugsweise auch des Vorratsbehälters (30), aufgebracht ist, wobei insbesondere das Aktivierungsmaterial (32) derart ausgebildet ist, dass es bei Kontakt mit dem Arbeitsfluid (31) das Arbeitsfluid vergrößert bzw. aufschäumt und/oder verhärtet bzw. dessen Fließfähigkeit verringert.

13. Ausdehnungssystem nach Anspruch 10 oder 11, **dadurch gekennzeichnet, dass** nur eine Innenseite der Fluidleitung (28), vorzugsweise auch des Vorratsbehälters (30), mit dem Aktivierungsmaterial (32a-c) beschichtet ist, wobei vorzugsweise die Innenseite der Fluidleitung (28) mit dem Aktivierungsmaterial (32c) beschichtet ist und auf diese Beschichtung mit Aktivierungsmaterial (32c) eine weitere Abdeckschicht (33c) vollständig bedeckend aufgebracht ist derart, dass das Arbeitsfluid (31c) nur bei Undichtigkeit des Ausdehnungssystems (11) bzw. der Fluidleitung (28) und Zerstörung der Abdeckschicht (33c) mit dem Aktivierungsmaterial (32c) in Kontakt kommt zur Zusammenwirkung.

14. Ausdehnungssystem nach einem der Ansprüche 6 bis 9, **dadurch gekennzeichnet, dass** das Aktivierungsmaterial (32d) verkapselt bzw. eingeschlossen ausgebildet ist mit einer Außenhülle aus Hüllmaterial, insbesondere in Mikrokapseln, und innerhalb des Ausdehnungsbehälters (16) angeordnet ist, wobei die Verkapselung derart ausgebildet ist, dass das Aktivierungsmaterial (32d) nicht in Kontakt kommt mit dem Arbeitsfluid (31d), wobei insbesondere die Verkapselung derart ausgebildet ist, dass eine Volumenverringerung des Ausdehnungsbehälters (16) über ein definiertes Maß hinaus die Verkapselung aufbricht bzw. zerstört und das Aktivierungsmaterial (32d) miteinander und/oder mit dem Arbeitsfluid (31d) in Kontakt kommt bzw. sich vermischt und mit diesem derart zusammenwirkt, dass das Volumen der Mischung vergrößert wird, vorzugsweise auch danach die Fließfähigkeit des Arbeitsfluids (31d) stark verringert wird.

15. Ausdehnungssystem nach Anspruch 14, **dadurch gekennzeichnet, dass** der Ausdehnungsbehälter (16) eine verschließbare Öffnung aufweist zum Einbringen des verkapselten Aktivierungsmaterials (32d), wobei insbesondere die Öffnung derart druckdicht verschließbar ist, dass sie einem Druck standhält, der mindestens 20% höher ist als der Arbeitsdruck des Ausdehnungssystems (11).

## Claims

1. Method for changing a working fluid (31) in an expansion system (11) for temperature detection by means of thermomechanical expansion and movement, wherein the expansion system (11)
- contains the working fluid (31), and
- has an activation material (32) for changing the working fluid (31),
**characterized in that**
the activation material (32), upon contact with the working fluid (31) or upon mixing with the working fluid, changes said working fluid with regard to its volume and/or its flowability.

2. Method according to claim 1, **characterized in that** the activation material (32a-c) changes only the flowability of the working fluid (31a-c), wherein in particular the activation material brings about hardening of the working fluid, preferably curing of the working fluid.

3. Method according to claim 1, **characterized in that** the activation material (32d) firstly increases the volume of the working fluid (31d), in particular by foaming, and then reduces the flowability, wherein preferably the activation material subsequently hardens the working fluid, which has increased in volume, in particular hardens the working fluid permanently.

4. Method according to any of the preceding claims, **characterized in that** the activation material (32a-c) crosslinks the working fluid (31a-c), wherein in particular the working fluid is silicone-based, in particular is a silicone oil.

5. Method according to any of the preceding claims, **characterized in that** the activation material (32b) changes the working fluid (31b) with regard to a volume and/or a flowability of the latter, with the additional effect of oxygen.

6. Expansion system (11) for temperature detection by means of thermomechanical expansion and movement, having:
- an expansion vessel (16),
- an elongate fluid line (28) which is connected in a fluid-conducting manner to the expansion vessel (16),
- a switching means (14) which is mechanically operatively connected to the expansion vessel (16) for the purpose of actuation of a switching process of the switching means at a settable actuation point,
- a working fluid (31) in the expansion vessel (16) and in the fluid line (28),
**characterized in that**
the expansion system has an activation material (32) which is configured, upon contact with the working fluid (31) or upon mixing with the working fluid, to change said working fluid (31) with regard to its volume and/or its flowability.

7. Expansion system according to claim 6, **characterized in that** the expansion system (11) is configured to carry out the method according to one of Claims 1 to 5.

8. Expansion system according to claim 6 or 7, **characterized in that** the activation material (32b) is configured in such a form that, together with oxygen and/or water, it brings about the change of the working fluid (31b).

9. Expansion system according to any of the claims 6 to 8, **characterized in that** the activation material (32a) is configured in such a form that, together with a catalyst, preferably platinum, it brings about the change of the working fluid (31a).

10. Expansion system according to any of the claims 6 to 9, **characterized in that** the activation material (32a-c) is not added to the working fluid (31a-c), but is applied to a surface of the expansion system (11), in particular onto a surface of the fluid line (28).

11. Expansion system according to claim 10, **characterized in that** the activation material (32d) is also applied to a surface of a supply vessel (30) at one end of the fluid line (28), which end is at a distance or facing away from the end with the expansion vessel (16).

12. Expansion system according to claim 10 or 11, **characterized in that** the activation material (32) is applied to the outer side of the fluid line (28), preferably also of the supply vessel (30), wherein in particular the activation material (32) is of such a form that, upon contact with the working fluid (31), it expands or foams and/or hardens the working fluid and/or reduces the flowability thereof.

13. Expansion system according to claim 10 or 11, **characterized in that** only an inner side of the fluid line (28), preferably also of the supply vessel (30), is coated with the activation material (32a-c), wherein preferably the inner side of the fluid line (28) is coated with the activation material (32c) and a further cover layer (33c) is applied in a completely covering manner to said coating with activation material (32c) such that the working fluid (31c) comes into contact with the activation material (32c) for the purpose of interaction only in the case of a leak of the expansion system (11) or of the fluid line (28) and destruction of the cover layer (33c).

14. Expansion system according to any of the claims 6 to 9, **characterized in that** the activation material (32d) is encapsulated, or formed so as to be enclosed, with an outer casing composed of casing material, in particular in microcapsules, and is arranged within the expansion vessel (16), wherein the encapsulation is of such a form that the activation material (32d) does not come into contact with the working fluid (31d), wherein in particular the encapsulation is formed such that a reduction in volume of the expansion vessel (16) beyond a defined dimension breaks open or destroys the encapsulation, and the activation material (32d) comes into mutual contact and/or into contact with the working fluid (31d) or is mixed therewith and interacts therewith such that the volume of the mixture is increased, preferably subsequently also the flowability of the working fluid (31d) is greatly reduced.

15. Expansion system according to claim 14, **characterized in that** the expansion vessel (16) has a closable opening for the introduction of the encapsulated activation material (32d), wherein in particular the opening is closable in a pressure-tight manner such that it can withstand a pressure which is at least 20% higher than the working pressure of the expansion system (11).

## Revendications

1. Procédé de changement d'un fluide de travail (31) dans un système d'expansion (11) pour la détection de température par le biais d'expansion et de mouvement thermomécanique, dans lequel le système d'expansion (11)
- contient le fluide de travail (31) et
- comprend un matériau d'activation (32) pour la modification du fluide de travail (31),
**caractérisé en ce que**
le matériau d'activation (32), lors de contact avec le fluide de travail (31) ou lors de mélange avec le fluide de travail, modifie ledit fluide de travail en termes de son volume et/ou sa fluidité.

2. Procédé selon la revendication 1, **caractérisé en ce que** le matériau d'activation (32a-c) modifie seulement la fluidité du fluide de travail (31a-c), dans lequel en particulier le matériau d'activation cause un durcissement du fluide de travail, de préférence endurcissement du fluide de travail.

3. Procédé selon la revendication 1, **caractérisé en ce que** le matériau d'activation (32d) en premier fait élargir le volume du fluide de travail (31d), en particulier par le faire mousser, et après fait réduire la fluidité, dans lequel de préférence le matériau d'activation ensuite fait durcir le fluide de travail de volume élargi, en particulier le fait endurcir en permanence.

4. Procédé selon l'une quelconque des revendications précédentes, **caractérisé en ce que** le matériau d'activation (32a-c) fait réticuler le fluide de travail (31a-c), dans lequel en particulier le fluide de travail est à base de silicone, en particulier est une huile aux silicones.

5. Procédé selon l'une quelconque des revendications précédentes, **caractérisé en ce que** le matériau d'activation (32b) modifie le fluide de travail (31b) sous l'effet supplémentaire d'oxygène en termes de son volume et/ou sa fluidité.

6. Système d'expansion (11) pour la détection de température par le biais d'expansion et de mouvement thermomécanique, comprenant :
- un vase d'expansion (16),
- un conduit de fluide allongé (28) qui est connecté en communication fluidique avec le vase d'expansion (16),
- un moyen de commutation (14) qui est connecté en liaison active mécanique avec le vase d'expansion (16) pour l'actionnement d'un processus de commutation du moyen de commutation sur un point d'actionnement réglable,
- un fluide de travail (31) dans le vase d'expansion (16) et dans le conduit de fluide (28),
**caractérisé en ce que**
le système d'expansion comprend un matériau d'activation (32) qui est configuré pour modifier ledit fluide de travail (31) en termes de son volume et/ou sa fluidité lors de contact avec le fluide de travail (31) ou lors de mélange avec le fluide de travail.

7. Système d'expansion selon la revendication 6, **caractérisé en ce que** le système d'expansion (11) est configuré pour exécuter le procédé selon l'une quelconque des revendications 1 à 5.

8. Système d'expansion selon la revendication 6 ou 7, **caractérisé en ce que** le matériau d'activation (32b) est configuré de telle manière qu'il cause la modification du fluide de travail (31b) conjointement avec de l'oxygène et/ou de l'eau.

9. Système d'expansion selon l'une quelconque des revendications 6 à 8, **caractérisé en ce que** le matériau d'activation (32a) est configuré de telle manière qu'il cause la modification du fluide de travail (31a) conjointement avec un catalyseur, de préférence du platine.

10. Système d'expansion selon l'une quelconque des revendications 6 à 9, **caractérisé en ce que** le matériau d'activation (32a-c) n'est pas ajouté au fluide de travail (31a-c), mais est appliqué sur une surface du système d'expansion (11), en particulier sur une surface du conduit de fluide (28).

11. Système d'expansion selon la revendication 10, **caractérisé en ce que** le matériau d'activation (32d) est aussi appliqué sur une surface d'un réservoir fournisseur (30) à une extrémité du conduit de fluide (28), ladite extrémité étant éloignée ou détournée de l'extrémité avec le vase d'expansion (16).

12. Système d'expansion selon la revendication 10 ou 11, **caractérisé en ce que** le matériau d'activation (32) est appliqué sur la face extérieure du conduit de fluide (28), de préférence aussi du réservoir fournisseur (30), dans lequel en particulier le matériau d'activation (32) est configuré de telle manière que, lors de contact avec le fluide de travail (31), il le fait élargir ou mousser et/ou le fait durcir ou réduit la fluidité du fluide de travail.

13. Système d'expansion selon la revendication 10 ou 11, **caractérisé en ce que** seulement une face intérieure du conduit de fluide (28), de préférence aussi du réservoir fournisseur (30), est revêtue de matériau d'activation (32a-c), dans lequel de préférence la face intérieure du conduit de fluide (28) est revêtue de matériau d'activation (32c) et sur ce revêtement de matériau d'activation (32c) une autre couche de couverture (33c) est appliquée le recouvrant complètement de telle façon que le fluide de travail (31c) n'entre en contact avec le matériau d'activation (32c) pour une interaction que dans le cas de fuite du système d'expansion (11) ou du conduit de fluide (28) et destruction de la couche de couverture (33c).

14. Système d'expansion selon l'une quelconque des revendications 6 à 9, **caractérisé en ce que** le matériau d'activation (32d) est sous forme capsulée ou enfermée avec une enveloppe extérieure de matériau d'enveloppe, en particulier dans microcapsules, et est logé dans le vase d'expansion (16), dans lequel l'encapsulation est de telle façon que le matériau d'activation (32d) n'entre pas en contact avec le fluide de travail (31d), dans lequel en particulier l'encapsulation est de telle façon qu'une réduction de volume du vase d'expansion (16) dépassant une mesure définie défonce ou détruit l'encapsulation et le matériau d'activation (32d) entre en contact ou se mélange entre eux et/ou avec le fluide de travail (31d) et coopère avec ledit fluide de telle façon que le volume du mélange s'élargit, de préférence aussi ensuite la fluidité du fluide de travail (31d) est réduite fortement.

15. Système d'expansion selon la revendication 14, **caractérisé en ce que** le vase d'expansion (16) présente une ouverture fermable pour l'introduction du matériau d'activation (32d) capsulé, dans lequel en particulier l'ouverture est fermable étanche à la pression de telle façon qu'elle résiste à une pression supérieure à la pression de fonctionnement du système d'expansion (11) d'au moins 20% de plus.
